# EUROPÄISCHE PATENTANMELDUNG

(11) **EP 1 069 413 A2**
(43) Veröffentlichungstag der Anmeldung: **17.01.2001**
(21) Anmeldenummer: 00112122.7
(22) Anmeldetag: 06.06.2000
(51) Int. Cl.: G01H 7/00

(54) **Verfahren und Vorrichtung zur Ermittlung der akustischen Raumeigenschaften insbesondere eines Fahrgastraumes**

(30) Priorität: 16.07.1999 DE 19933317
(71) Anmelder: Bayerische Motoren Werke Aktiengesellschaft, 80809 München (DE)
(72) Erfinder: Peters, Mike, 85356 Freising (DE)

(57) **Zusammenfassung**

Bei einer Vorrichtung und einem Verfahren zur Ermittlung der akustischen Raumeigenschaften, insbesondere eines Fahrgastraumes in einem Kraftfahrzeug, mittels eines einen Nutzschall aussendenden Gerätes durch Aussenden eines Testschalls und durch Analysieren eines aufgenommenen Auswerteschalls wird der Testschall in einem psychoakustischen Verdeckungsbereich des Nutzschalles ausgesendet. Vorteilhafterweise wird der Verdeckungsbereich des Nutzschalles in einem Nutzschall-Analyseblock festgestellt, bevor der Nutzschall und der Testschall ausgesendet werden.

## Beschreibung

Die Erfindung bezieht sich auf ein Verfahren und eine Vorrichtung zur Ermittlung der akustischen Raumeigenschaften, insbesondere eines Fahrgastraumes in einem Kraftfahrzeug, nach dem Oberbegriff des Patentanspruchs 1 bzw. 3.

Beispielsweise bei Audio- und Video-Receivern für HiFi-Wiedergabe sind Verfahren bekannt, die einmalig manuelle oder automatische Einstellungen an den den Nutzschall wiedergebenden Geräten zur Raumanpassung ermöglichen. Bei einer bekannten manuellen Einstellmöglichkeit können beispielsweise die Raummaße, die Orte der Lautsprecher und/oder der Reflexionscharakter der Wände am Gerät eingegeben werden. Bei einer bekannten automatischen Einstellmöglichkeit werden beim Installieren eines HiFi-Geräts durch Aussenden eines speziellen Testschalles und durch Auswerten des daraufhin mit einem Mikrofon aufgenommenen Auswerteschalles die Raumklangparameter ermittelt und entsprechend für die Wiedergabe eines raumangepaßten Nutzschalles mittels eines Raumklangprozessors abgespeichert.

Das Problem bei der Anwendung der bekannten Verfahren in Kraftfahrzeugen besteht darin, daß sich im Fahrgastraum die Raumakustik ständig verändert; z. B. abhängig von der Anzahl und der Bewegung der Fahrzeuginsassen, von geräuschbeeinflussenden Umwelteinflüssen, wie Windgeräuschen, Temperaturschwankungen oder Fahrbahnbeschaffenheit, oder von Betriebsparametern des Kraftfahrzeuges, wie Fahrzeuggeschwindigkeit oder Motordrehzahl.

Weiterhin sind Verfahren zur aktiven Schallkompensation mittels digitaler adaptiver Filter bekannt, die jedoch meist zu langsam adaptieren, um die sich im Fahrzeug oft sehr schnell ändernden Störgeräusche zu kompensieren.

Es ist Aufgabe der Erfindung, die Klangqualität von akustischen Systemen in Kraftfahrzeugen, wie z.B. CD- und Radiowiedergabegeräte oder Telefonfreisprechanlagen, auf einfache Weise im Sinne einer dynamischen Raumanpassung zu optimieren.

Diese Aufgabe wird durch die Merkmale des Patentanspruchs 1 bzw. 3 verfahrensmäßig bzw. vorrichtungsmäßig gelöst. Vorteilhafte Weiterbildungen der Erfindung sind die Gegenstände der abhängigen Patentansprüche.

Erfindungsgemäß wird zur Ermittlung der akustischen Raumeigenschaften insbesondere eines Fahrgastraumes in einem Kraftfahrzeug mittels eines Gerätes, das üblicherweise einen Nutzschall (z. B. Musik) aussendet, zusätzlich ein Testschall ausgesendet. Dieser Testschall wird in einem psychoakustischen Verdeckungsbereich des Nutzschalles ausgesendet. Anschließend wird der Gesamtschall, bestehend aus dem reflektierten Nutzschall und dem reflektierten Testschall als Auswerteschall aufgenommen. Der reflektierte Testschallanteil des Auswerteschalles wird schließlich im Hinblick auf die akustischen Raumeigenschaften (in bekannter Weise) analysiert.

Dabei werden vorzugsweise insbesondere die Nachverdeckung im Zeitbereich und/oder die Simultanverdeckung im Frequenzbereich genutzt. Die Nutzung der Vorverdeckung ist zwar eine mögliche, jedoch eine zu aufwendige Alternative.

Durch diese Erfindung kann gleichzeitig mit dem Nutzschall (z. B. während eines Musikstückes) auch der Testschall abgegeben werden, wobei der Testschall durch den sogenannten Maskierungseffekt des Nutzschalles unhörbar wird.

Zum Wesen der psychoakustischen Verdeckung wird zur Hintergrundinformation auf das Lehrbuch 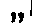 Psychoakustik", von E. Zwicker, Springer-Verlag, 1982, insbesondere Seiten 35 ff. und Seiten 94 ff., hingewiesen.

In einer vorteilhaften Ausgestaltung der Erfindung wird der Verdeckungsbereich des Nutzschalles in einem Nutzschall-Analyseblock festgestellt und der für den jeweils festgestellten Verdeckungsbereich angepaßte Testschall definiert, bevor der Nutzschall und der Testschall ausgesendet werden. Beispielsweise können innerhalb eines Musikstückes abhängig von einzelnen Musikstückabschnitten (als Nutzschalle), z. B. mit besonders weiten Verdeckungsbereichen, mehrmals verschiedene Testschalle ausgesendet werden.

Mit dieser Erfindung werden die Raumeigenschaften und damit die Raumübertragungscharakteristika dynamisch adaptiv ermittelt und kompensiert. Dies geschieht mit beliebig häufigen Testschallaussendungen während einer Nutzschallwiedergabe, die durch die Wahl des jeweiligen Testschalles im nichthörbaren Bereich möglich sind.

Weiterhin ist durch die Erfindung gleichzeitig eine Kompensation von Streuungen der elektroakustischen Komponenten (wie Lautsprecher, Mikrofon, Wandler oder Verstärker) möglich.

In der Zeichnung ist ein Ausführungsbeispiel der Erfindung dargestellt. Es zeigen
- Fig. 1: eine mögliche Vorrichtung zur Durchführung des erfindungsgemäßen Verfahrens
- Fig. 2: einen möglichen Testschall im Nachverdeckungsbereich nach dem erfindungsgemäßen Verfahren
- Fig. 3: ein möglicher Testschall im Simultanverdeckungsbereich nach dem erfindungsgemäßen Verfahren

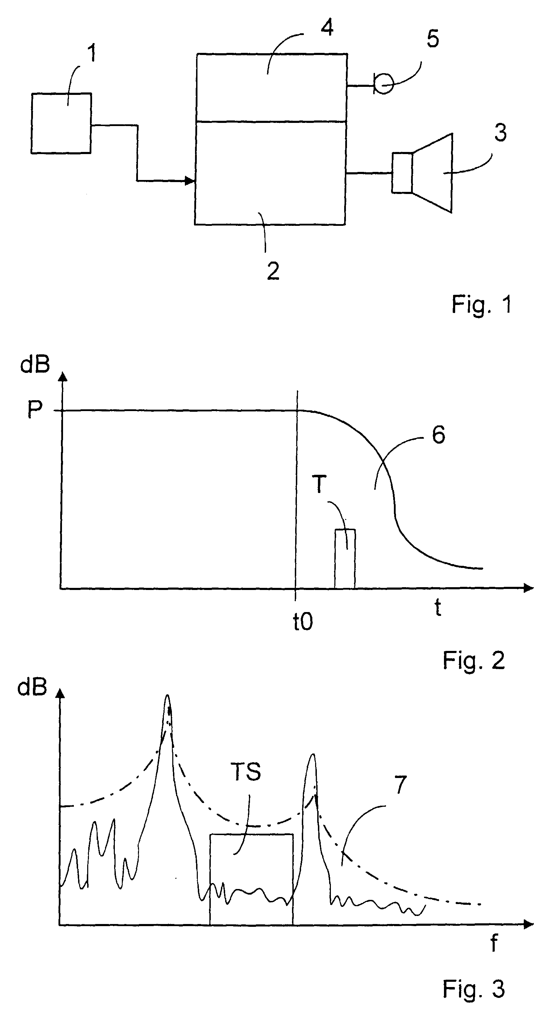

In Fig. 1 ist beispielsweise eine Freisprechtelefonanlage oder ein CD-Player in einem Kraftfahrzeug als ein einen Nutzschall aussendendes Gerät 1 dargestellt. Vom Gerät 1 wird das Nutzschall-Signal zunächst zu einem Nutzschall-Analyseblock 2 geführt. Im Nutzschall-Analyseblock 2 wird der psychoakustische Verdeckungsbereich, insbesondere der Nachverdeckungsbereich (Fig. 2) und/oder der Simultanverdeckungsbereich (Fig. 3) des (hörbaren) Nutzschalles, der aus dem (zunächst digital oder analog vorliegenden elektrischen) Nutzschall-Signal resultiert, ermittelt.

Anschließend wird zumindest in einem der beiden ermittelten Verdeckungsbereiche (6, Fig. 2; 7, Fig. 3) der Testschall (T; TS) definiert, der vorzugsweise aus orthogonalen Anregungssequenzen besteht. Erfindungswesentlich ist die Wahl des Testschalles im Verdeckungsbereich, d. h. in einem Frequenzbereich und/oder in einem Pegelbereich, der für das menschliche Ohr durch den Maskierungseffekt des Nutzschalles nicht hörbar ist.

Der Verdeckungsbereich des Nutzschalles wird im Nutzschall-Analyseblock 2 festgestellt, bevor der Nutzschall und der Testschall ausgesendet werden. D. h. der vom Gerät 1 ausgesendete Nutzschall wird (zusammen mit dem Testschall) durch den Nutzschall-Analyseblock 2 verzögert an den Lautsprecher 3 ausgegeben.

Zur Ermittlung der akustischen Raumeigenschaften des Fahrgastraumes wird der so definierte Testschall vom Nutzschall-Analyseblock 2 über den Lautsprecher 3 zusammen mit dem Nutzschall in den Fahrgastraum ausgesendet. Anschließend wird im Testschall-Auswerteblock 4 der Auswerteschall mittels eines Mikrofons 5, das z. B. das ohnehin vorhandene Freisprechmikrofon oder ein zusätzliches Referenzmikrofon sein kann, aufgenommen und analysiert. Der Auswerteschall enthält zwar sowohl den reflektierten Nutzschall als auch den reflektierten Testschall, jedoch ist durch eine Verbindung des Nutzschall-Analyseblockes 2, der den Nutzschall und den Testschall aussendet, mit dem Testschall-Auswerteblock 4 eine isolierte Betrachtung des reflektierten Testschalles möglich. Die spezielle Analyse erfolgt durch einen entsprechenden Vergleich des ausgesendeten Testschalls mit dem aufgenommenen Testschall beispielsweise ähnlich der bekannten Korrelationstechnik. Hierdurch lassen sich die Raumeigenschaften in Form einer Raumübertragungsfunktion bestimmen und bei der weiteren Wiedergabe des Nutzschalls berücksichtigen.

Der Nutzschall-Analyseblock 2 und der Testschall-Auswerteblock 4 können auch im Gerät 1 integriert sein.

In Fig. 2 ist auf der Abszisse die Zeit t und auf der Ordinate der Pegel (in dB) aufgetragen. Bis zum Zeitpunkt t0 wird vom Gerät 1 (Fig. 1) ein Nutzschall bzw. ein Nutzschall-Signal, z. B. ein Musikstückabschnitt, mit einem mittleren Pegel P wiedergegeben. Zum Zeitpunkt t0 folgt eine Pause. Im Pausenbereich (t> t0) ist der Pegelverlauf des Nachverdeckungbereiches 6 dargestellt. In diesem Nachverdeckungsbereich 6 wird der Testschall T definiert, der insbesondere einen Pegelverlauf aufweist, der unterhalb des Pegelverlaufs des Nachverdeckungsbereichs 6 liegt.

In Fig. 3 ist auf der Abszisse die Frequenz f und auf der Ordinate der Pegel (in dB) aufgetragen. Der Nutzschall weist insbesondere zwei Frequenzen mit vergleichsweise hohen Pegeln auf, die den strichpunktierten Simultanverdeckungsbereich 7 prägen. Der Testschall wird in diesem Fall beispielsweise aus einem breitbandigen rauschähnlichen Testsignal (TS) unterhalb des Pegelverlaufs des Simultanverdeckungssbereichs 7 aber oberhalb der Pegel des Nutzschalles gebildet.

Somit liegt bei den genannten Ausführungsbeispielen sowohl der Testschall T nach Fig. 2 als auch der Testschall TS nach Fig. 3 in einem momentan nichthörbaren Bereich des menschlichen Ohres, so daß der Nutzschall gleichzeitig mit dem Testschall ausgesendet werden kann. Der Testschall hat aber andererseits einen ausreichend hohen Pegel, um zur dynamischen Ermittlung der Raumeigenschaften nach dem erfindungsgemäßen Verfahren genutzt werden zu können.

## Patentansprüche

1. Verfahren zur Ermittlung der akustischen Raumeigenschaften, insbesondere eines Fahrgastraumes in einem Kraftfahrzeug, mittels eines einen Nutzschall aussendenden Gerätes durch Aussenden eines Testschalls und durch Analysieren eines aufgenommenen Auswerteschalls, dadurch gekennzeichnet, daß der Testschall (T; TS) in einem psychoakustischen Verdeckungsbereich (6; 7) des Nutzschalles ausgesendet wird.

2. Verfahren nach Patentanspruch 1, dadurch gekennzeichnet, daß der Verdeckungsbereich (6; 7) des Nutzschalles in einem Nutzschall-Analyseblock (2) festgestellt wird, bevor der Nutzschall und der Testschall (T; TS) ausgesendet werden.

3. Vorrichtung zur Ermittlung der akustischen Raumeigenschaften, insbesondere eines Fahrgastraumes in einem Kraftfahrzeug, mit einem einen Nutzschall aussendenden Gerät, mit Mitteln zum Aussenden eines Testschalls und mit Mitteln zum Analysieren eines aufgenommenen Auswerteschalls, dadurch gekennzeichnet, daß Mittel (2) vorgesehen sind, die den Testschall (T; TS) in einem psychoakustischen Verdeckungsbereich (6; 7) des Nutzschalles definieren und aussenden.

4. Vorrichtung nach Patentanspruch 3, dadurch gekennzeichnet, daß ein Nutzschall-Analyseblock (2) vorgesehen ist, der den Verdeckungsbereich (6; 7) des Nutzschalles feststellt, bevor der Nutzschall und der Testschall (T; TS) ausgesendet werden.
